# EUROPÄISCHE PATENTSCHRIFT

(11) **EP 0 717 834 B1**
(45) Veröffentlichungstag und Bekanntmachung des Hinweises auf die Patenterteilung: **18.04.2001**
(21) Anmeldenummer: 94925347.0
(22) Anmeldetag: 06.09.1994
(51) Int. Cl.: G01J 3/36, G01J 3/12

(54) **VORRICHTUNG ZUR SELEKTION UND DETEKTION MINDESTENS ZWEIER SPEKTRALBEREICHE EINES LICHTSTRAHLS**
DEVICE FOR THE SELECTION AND DETECTION OF AT LEAST TWO SPECTRAL REGIONS IN A BEAM OF LIGHT
DISPOSITIF DE SELECTION ET DE DETECTION D'AU MOINS DEUX ZONES SPECTRALES D'UN FAISCEAU LUMINEUX

(30) Priorität: 08.09.1993 DE 4330347
(43) Veröffentlichungstag der Anmeldung: 26.06.1996
(60) Teilanmeldung: 00116086.0
(73) Patentinhaber: Leica Microsystems Heidelberg GmbH, 69120 Heidelberg (DE)
(72) Erfinder: ENGELHARDT, Johann, D-76669 Bad Schönborn (DE)
(74) Vertreter: Naumann, Ulrich, Dr.-Ing.
(86) Internationale Anmeldenummer: DE9401019
(87) Internationale Veröffentlichungsnummer: WO9507447

(56) Entgegenhaltungen:
- US-A- 4 519 707
- PATENT ABSTRACTS OF JAPAN vol. 16, no. 319 (P-1385) 13. Juli 1992 & JP,A,04 093 915 (NIKON CORP) 26. März 1992
- PATENT ABSTRACTS OF JAPAN vol. 10, no. 154 (P-463) 4. Juni 1986 & JP,A,61 007 426 (SHIMAZU SEISAKUSHO KK) 14. Januar 1986

## Beschreibung

Die Erfindung betrifft die Verwendung einer Vorrichtung zur Selektion und Detektion mindestens zweier Spektralbereiche eines Lichtstrahls, im Strahlengang eines konfokalen Fluoreszenzmikroskops, wobei die Vorrichtung eine Selektionseinrichtung mit Mitteln zur spektralen Zerlegung des Lichtstrahls und mit Mitteln einerseits zum Ausblenden eines die letzteren Mittel passierenden ersten Spektralbereichs und andererseits zur Reflexion zumindest eines Teils des nicht ausgeblendeten Spektralbereichs und eine Detektionseinrichtung mit einem im Strahlengang des ausgeblendeten ersten Spektralbereichs angeordneten ersten Detektor und mit einem im Strahlengang des reflektierten Spektralbereichs angeordneten zweiten Detektor umfaßt.

Aus der Literaturstelle "Proceedings of Scanning", Vol. 13, Supplement 1, 1991, Seiten 1-76 und 1-77, ist ein konfokales Fluoreszenzmikroskop bekannt, mit dem sich der Spektralbereich eines Farbstoffes detektieren läßt Ein von einem Laser erzeugter Lichtstrahl wird mit Hilfe optischer Bausteine zu einem zu mikroskopierenden Objekt geführt und von diesem reflektiert bzw. regt dort Fluoreszenzstoffe an. Der Reflexions- oder Fluoreszenzlichtstrahl wird mittels eines Strahlteilers ausgekoppelt und über ein optisches Filter einem Detektor zugeleitet. Das Filter erfüllt die Aufgabe, den Spektralbereich des Farbstoffes auszublenden. Ist der relevante Farbstoff in dem zu mikroskopierenden Objekt enthalten, so wird dieser aufgrund der hohen Intensität von dem Detektor erkannt. Folglich ist es auf diese Weise bei einer beispielsweise biomedizinischen Anwendung möglich, eingefärbte Zellen bzw. Zellstrukturen in einem Objekt nachzuweisen.

Auch ist es bereits bekannt, die zuvor beschriebene Mikroskopiertechnik in erweitertem Umfang anzuwenden. So werden beispielsweise unterschiedliche Zellbestandteile gleichzeitig mit zwei oder mehreren Farbstoffen gefärbt, um die räumliche Korrelation der Zellbestandteile feststellen bzw. untersuchen zu können. Im Rahmen dieser Anwendung ist es jedoch erforderlich, die unterschiedlichen Spektralbereiche der jeweiligen Farbstoffe aus dem insgesamt reflektierten Lichtstrahl auszublenden. Dazu werden bislang Strahlteiler und optische Filter verwendet, die auf den jeweiligen Spektralbereich exakt abgestimmt sind. Jeder ausgeblendete Lichtstrahl wird dann in für sich bekannter Weise einem eigens dafür vorgesehenen Detektor zugeführt.

Die zuvor genannte, zur Selektion und Detektion mindestens zweier Spektralbereiche eines Lichtstrahls dienende Vorrichtung hat den ganz erheblichen Nachteil, daß für jeden Farbstoff ein besonderes Filter erforderlich ist. Insbesondere im Hinblick auf die Möglichkeit der Detektion verschiedener Farbstoffe bzw. Farbstoffkombinationen hat dies zur Folge, daß eine Vielzahl von Filtern - systembedingt - bereitgestellt sein muß. Ein weiterer Nachteil der bekannten Vorrichtung ist darin zu sehen, daß die Intensität des von dem Objekt reflektierten Lichtstrahls durch die Filter verringert wird. Dies hat wiederum zur Folge, daß für eine zuverlässige Selektion und Detektion von Spektralbereichen an die Detektoren erhöhte optische und gegebenenfalls elektronische Anforderungen gestellt werden müssen.

Es ist aus der US-A-4 519 707 weiterhin eine Vorrichtung zur Selektion und Detektion mindestens zweier Spektralbereiche eines Lichtstrahls bekannt, bei der als Selektionseinrichtung ein Gitter bzw. ein Prisma Verwendung findet. Die Detektionseinrichtung besteht aus mindestens zwei Detektoren, denen jeweils Lichtleiterelemente vorgeordnet sind.

Schließlich ist es aus JP-A-61 007 426 bekannt, bei einem Fotometer den Einsatz von Spiegelblenden zur Aufspaltung von Lichtstrahlen in einen ausgeblendeten Anteil und einen reflektierten Anteil vorzusehen.

Aus diesem Stand der Technik ist jedoch keine Möglichkeit zur variablen Einstellbarkeit der auszublendenden und reflektierten Bereiche zu entnehmen. Als weiterer Nachteil der aus US-A-4 519 707 bekannten Anordnung ist es anzusehen, daß dort Lichtleiter zur Zuführung des Lichts zu den Detektoren verwendet werden, was naturgemäß immer mit Lichtverlusten einhergeht. Dies stellt insbesondere dann einen schwerwiegenden Nachteil dar, wenn schwache Fluoreszenzausbeuten gemessen werden müssen.

Vor allem aber fehlen jegliche Hinweise und Anregungen, die bekannten Anordnungen für Konfokalmikroskope zu verwenden.

Erfindungsgemäß ist erkannt worden, daß sich die weiter oben erwähnte Vorrichtung besonders gut für den Einsatz im Strahlengang eines konfokalen Fluoreszenzmikroskops eignet, wobei die Vorrichtung dem eigentlichen Fluoreszenzmikroskop zur Aufnahme des dort reflektierten Lichtstrahls bzw. Fluoreszenzlichtstrahls nachgeschaltet ist. Mit der bekannten Vorrichtung lassen sich nämlich bei einfachster Konstruktion eine zuverlässige Selektion und Detektion unterschiedlicher Spektralbereiche realisieren. Die Selektion und Detektion der unterschiedlichen Spektralbereiche erfolgt gleichzeitig und mit hoher Ausbeute.

In erfindungsgemäßer Weise wird aus dem spektral zerlegten Lichtstrahl ein erster Spektralbereich ausgeblendet. Der nicht ausgeblendete Spektralbereich wird - gleichzeitig - zumindest zum Teil reflektiert, wobei sowohl der ausgeblendete erste Spektralbereich als auch der hier reflektierte Spektralbereich mittels jeweils eines Detektors detektiert wird, und zwar durch Anordnung der Detektoren im jeweiligen Strahlengang. In erfindungsgemäßer Weise ist demnach erkannt worden, daß die Kombination von Ausblenden eines ersten Spektralbereichs und Reflektieren des nicht ausgeblendeten Spektralbereichs zu einer scharfen Trennung und somit einzelnen Detektion der so voneinander getrennten Spektralbereiche führt. Auf die jeweiligen Spektralbereiche abgestimmte Filter sind somit nicht erforderlich.

Wie bereits zuvor erwähnt, wird aus dem spektral zerlegten Lichtstrahl ein erster Spektralbereich ausgeblendet und der nicht ausgeblendete Spektralbereich wird reflektiert. Die zum Ausblenden dienenden Mittel sind dabei derart ausgelegt, daß der ausgeblendete erste Spektralbereich exakt dem hier zu detektierenden Spektralbereich entspricht. Gleiches gilt für den reflektierten Spektralbereich, der durch besondere Ausgestaltung der Reflexionsfläche definierbar ist. Dieser reflektierte Spektralbereich kann im Rahmen einer besonders vorteilhaften Ausgestaltung durch im Strahlengang des reflektierten Spektralbereichs angeordnete Mittel im Umfange eines zweiten - definierten - Spektralbereichs ausgeblendet werden. Der zweite Detektor wäre dann im Strahlengang des ausgeblendeten zweiten Spektralbereichs angeordnet, wobei auch hier wieder eine Selektion - durch den zweiten Detektor selbst - stattfinden könnte.

Sofern eine Selektion und Detektion weiterer Spektralbereiche erforderlich ist, könnten die Mittel zum Ausblenden des zweiten Spektralbereichs - wie im Falle der Mittel zum Ausblenden des ersten Spektralbereichs - Vorkehrungen zur Reflexion zumindest eines Teils des hier nicht ausgeblendeten Spektralbereichs umfassen. Auch hier wäre der zweite Detektor im Strahlengang des ausgeblendeten zweiten Spektralbereichs angeordnet. Im Strahlengang des nunmehr weiter reflektierten Spektralbereichs wäre dann ein dritter Detektor anzuordnen, so daß insgesamt drei Spektralbereiche detektierbar sind. Auch im Strahlengang des weiter reflektierten Spektralbereichs könnten Mittel zum Ausblenden des dritten Spektralbereichs vorgesehen sein, so daß dann der dritte Detektor im Strahlengang des ausgeblendeten dritten Spektralbereichs angeordnet ist. Die zuvor genannte Anordnung, nämlich die Vorkehrung mehrerer Spektralbereiche ausblendenden und reflektierenden Mittel sowie Detektoren, könnte auch in kaskadierter Form kombiniert sein, so daß der jeweils ausgeblendete Spektralbereich detektiert und der jeweils reflektierte Spektralbereich ggf. abermals ausgeblendet und ebenfalls detektiert werden kann.

Hinsichtlich einer besonders kompakten Ausgestaltung der erfindungsgemäß verwendeten Vorrichtung ist es von besonderem Vorteil, wenn die zum Ausblenden und ggf. zur Reflexion dienenden Mittel und der jeweils dazugehörende Detektor als integrale Baugruppe ausgeführt sind. Zur Kaskadierung wären hier entsprechende Baugruppen zu kombinieren, die lediglich hinsichtlich ihrer Anordnung und Dimensionierung aufeinander abzustimmen sind.

Hinsichtlich einer konkreten Ausgestaltung der erfindungsgemäß verwendeten Vorrichtung ist es im Hinblick auf eine einfache Konstruktion von Vorteil, wenn die Mittel zur spektralen Zerlegung des Lichtstrahls als Prisma ausgeführt sind. Ebenso könnte es sich hierbei um ein optisches Gitter oder gar um ein Hologramm handeln. Wesentlich ist jedenfalls, daß eine spektrale Zerlegung des einfallenden Lichtstrahls stattfindet, so daß ein divergierender Lichtstrahl zur Verfügung steht.

Zur Beeinflussung der zu selektierenden und schließlich zu detektierenden Spektralbereiche könnte das Prisma bzw. das Gitter oder das Hologramm um eine vorzugsweise orthogonal zum einfallenden Lichtstrahl verlaufende Achse schwenkbar ausgeführt sein. Insoweit ließe sich der Spektralbereich bei feststehenden Mitteln zum Ausblenden einfachst beeinflussen.

Die Mittel zum Ausblenden eines Spektralbereichs könnten als Blende, vorzugsweise als Spaltblende, ausgeführt sein. Handelt es sich dabei um Mittel einerseits zum Ausblenden eines Spektralbereichs und andererseits zur Reflexion zumindest eines Teils des nicht ausgeblendeten Spektralbereichs, so könnten diese als Spiegelblende ausgeführt sein, die auf mindestens einer ihrer dem einfallenden Licht zugewandten Oberflächen eine vorzugsweise total reflektierende Beschichtung bzw. einen Spiegel aufweist. Sowohl der Spalt der Spaltblende als auch die reflektierende Fläche bzw. die reflektierenden Flächen könnten in ihrer Position und/oder Winkelstellung veränderbar sein, wozu diese Veränderungen vorzgusweise über einen Motorantrieb kontinuierlich, d.h. stufenlos, erfolgen könnten. In Ergänzung zu der Verstellbarkeit des zuvor beispielhaft genannten Prismas läßt sich auch hier der zu selektierende Spektralbereich einstellen bzw. vorgeben, wobei durch kombinierte Einstellbarkeit einerseits der Mittel zur spektralen Zerlegung und andererseits der Mittel zum Ausblenden und Reflektieren eine besonders exakte Vorgabe bzw. Einstellung des interessierenden Spektralbereichs stattfinden kann.

Zur Vermeidung von Beeinflussungen durch Streulicht bzw. zur Unterdrückung des primären Anregungslichtes könnten die Mittel zum Ausblenden eines Spektralbereichs und gegebenenfalls zur Reflexion zumindest eines Teils des nicht ausgeblendeten Spektralbereichs in vorteilhafter Weise weitere Mittel zum Ausblenden von Spektrallinien aufweisen. Dabei könnte es sich vorzugsweise um sog. Lichtfallen handeln. Diese Mittel zum Ausblenden von Spektrallinien könnten als nicht reflektierende Bereiche bzw. lichtabsorbierende Bereiche ausgeführt sein, wobei es sich hier schlicht und einfach um Sacklöcher handeln könnte, worin sich das einfallende Licht nach Mehrfachreflexion "totläuft". Diese zum Ausblenden von Spektrallinien dienenden besonderen Mittel könnten wiederum als integrale Bestandteile der zum Ausblenden der zu detektierenden Spektralbereiche dienenden Mittel ausgeführt sein.

Des weiteren wäre es auch denkbar, die als Lichtfallen dienenden, nicht reflektierenden Bereiche in ihrer Position und/oder Winkelstellung veränderbar zu gestalten, so daß auch insoweit eine exakte Einstellbarkeit gegeben ist. Die Veränderung könnte vorzugsweise über einen Motorantrieb kontinuierlich erfolgen, so daß bestimmte Streulichtzustände kompensierbar sind.

Auch wäre es denkbar, in den unterschiedlichen Strahlengängen der ausgeblendeten und/oder reflektierten Spektralbereiche grundsätzlich Mittel zur Reduktion von Streulicht anzuordnen, so daß durch Streulicht bedingte Störeinflüsse weitestgehend vermieden sind.

Hinsichtlich einer exakten Abstimmung der erfindungsgemäß verwendeten Vorrichtung ist es von Vorteil, wenn die Mittel zur spektralen Zerlegung des Lichtstrahls und die Mittel zum Ausblenden eines Spektralbereichs und gegebenenfalls zur Reflexion zumindest eines Teils des nicht ausgeblendeten Spektralbereichs in ihrer Winkelstellung und/oder Position relativ zueinander veränderbar sind. Insoweit könnte zur Vorgabe des zu detektierenden Spektralbereichs eine exakte Abstimmung stattfinden. Auch könnten die verschiedenen Mittel zum Ausblenden eines Spektralbereichs und gegebenenfalls zur Reflexion zumindest eines Teils des nicht ausgeblendeten Spektralbereichs unter- bzw. zueinander in ihrer Winkelstellung und/oder Position relativ zueinander veränderbar sein. Folglich wäre insoweit eine exakte Einstellung der unterschiedlichen "Ausblendungsstufen" möglich. Schließlich könnten die Detektoren in ihrer Relativlage zu den Mitteln zum Ausblenden eines Spektralbereichs und gegebenenfalls zur Reflexion zumindest eines Teils des nicht ausgeblendeten Spektralbereichs in ihrer Winkelstellung und/oder Position zueinander veränderbar sein. Auch insoweit ließen sich die ausgeblendeten und zu detektierenden Spektralbereiche abermals beeinflussen bzw. vorgeben, wobei sämtliche zuvor genannten Veränderungen von Winkelstellungen und/oder Positionen vorzugsweise über einen Motorantrieb erfolgen können.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung dreier Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einem schematischen Blockschaltbild ein konfokales Fluoreszenzmikroskop mit einer erfindungsgemäß verwendeten Vorrichtung;
- Fig. 2: in einem Diagramm ein über der Wellenlänge und der Intensität eines Lichtstrahls aufgetragenes Koordinatensystem, in dem die Spektren zweier Farbstoffe dargestellt sind;
- Fig. 3: in einem schematischen Blockschaltbild ein erstes Ausführungsbeispiel einer erfindungsgemäß verwendeten Vorrichtung zur Selektion und Dektektion zweier Spektralbereiche eines Lichtstrahls;
- Fig. 4: in einem schematischen Blockschaltbild ein zweites Ausführungsbeispiel einer erfindungsgemäß verwendeten Vorrichtung zur Selektion und Detektion dreier Spektralbereiche eines Lichtstrahls und
- Fig. 5: in einem schematischen Blockschaltbild ein drittes Ausführungsbeispiel einer erfindungsgemäß verwendeten Vorrichtung, jedoch mit einer verstellbaren Selektionseinrichtung.

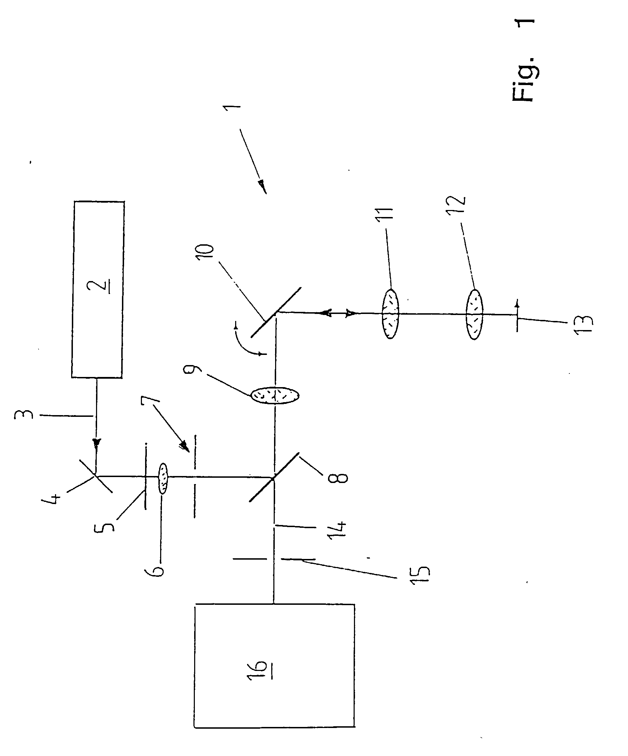

Fig. 1 zeigt in einem schematischen Blockschaltbild den grundsätzlichen Aufbau eines konfokalen Fluoreszenzmikroskops 1, bei dem von einem Laser 2 ein Lichtstrahl 3 erzeugt wird. Der Lichtstrahl 3 wird über einen Umlenkspiegel 4, einen Anregungsfilter 5, eine Linse 6 und eine Blende 7 einem Strahlteiler 8 zugeführt. Von dem Strahlteiler 8 wird der Lichtstrahl 3 um etwa 90° umgelenkt und gelangt über eine weitere Linse 9, einen schwenkbaren Scan-Spiegel 10, ein Okular 11 und ein Objektiv 12 zu dem zu mikroskopierenden Objekt 13. Von dem Objekt 13 wird zumindest ein Teil des dort einfallenden Lichtstrahls 3 reflektiert. Der reflektierte Lichtstrahl 14 durchläuft das Objektiv 12, das Okular 11, den Scan-Spiegel 10, die Linse 9 und gelangt sodann zurück zu dem Strahlteiler 8. Dort wird der reflektierte Lichtstrahl 14 geradlinig durchgelassen und gelangt über eine Blende 15 zu der erfindungsgemäß verwendeten Vorrichtung 16, in der der Lichtstrahl 14 optisch weiterverarbeitet wird.

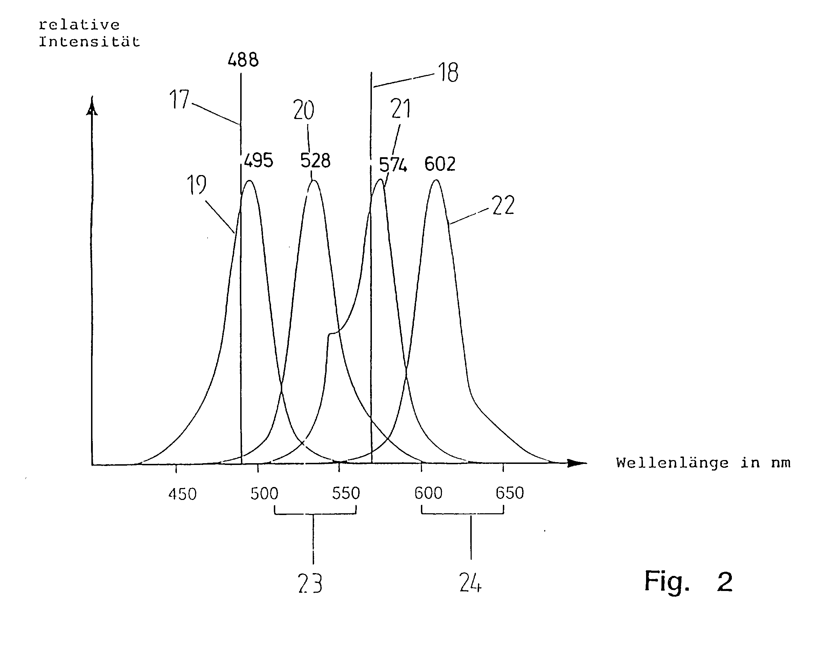

Fig. 2 zeigt die Spektren zweier Farbstoffe in einem Koordinatensystem. Auf der Abszisse ist die Wellenlänge des Lichts in Nanometer (nm) und auf der Ordinate ist die relative Intensität des Lichts abgetragen.

Handelt es sich bei dem Laser 2 beispielsweise um einen Argon-Krypton-Mischgaslaser, so wird von diesem insbesondere eine Argon-Linie 17 bei 488 nm und eine Krypton-Linie 18 beim 568 nm ausgestrahlt. Sind des weiteren Bestandteile des Objekts 13 selektiv mit dem Farbstoff FITC (Fluoresceinisothiocyanat) und dem Farbstoff Lissamin-Rhodamin eingefärbt, so werden der Farbstoff FITC von der Argon-Linie 17 und der Farbstoff Lissamin-Rhodamin von der Krypton-Linie 18 angeregt. Diese Anregungen bewirken im Zusammenhang mit dem Farbstoff FITC eine Absorption 19 im Bereich von etwa 495 nm und eine Emission 20 im Bereich von 528 nm. Bei dem Farbstoff Lissamin-Rhodamin erfolgt eine Absorption 21 im Bereich von etwa 574 nm und eine Emission 22 im Bereich von etwa 602 nm.

Sollen die unterschiedlich eingefärbten Bestandteile des Objekts 13 beim Mikroskopieren erkannt werden, so ist es erforderlich, die Emissionen 20 und 22 der Farbstoffe FITC und Lissamin-Rhodamin zu detektieren. Folglich sind der FITC-Spektralbereich 23 und der Lissamin-Rhodamin-Spektralbereich 24 der Emissionen 20 und 22 zu detektieren. Dies erfolgt bei dem in Fig. 1 dargestellten Fluoreszenzmikroskop 1 mit Hilfe der erfindungsgemäß verwendeten Vorrichtung 16 zur Selektion und Detektion unterschiedlicher Spektralbereiche.

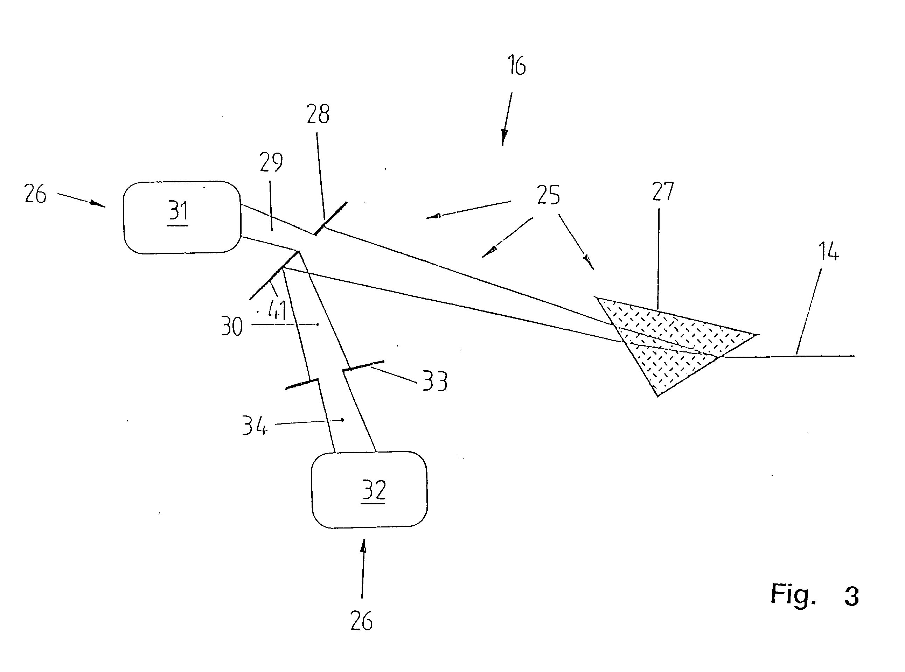

Fig. 3 zeigt nun ein erstes Ausführungsbeispiel einer erfindungsgemäß verwendeten Vorrichtung 16 zur Detektion zweier Spektralbereiche eines Lichtstrahls 14, mit einer Selektionseinrichtung 25 und einer Detektionseinrichtung 26.

In erfindungsgemäßer Weise weist die Selektionseinrichtung 25 Mittel 27 zur spektralen Zerlegung des Lichtstrahls 14 und Mittel 28 einerseits zum Ausblenden eines ersten Spektralbereichs 29 und andererseits zur Reflexion zumindest eines Teils 30 des nicht ausgeblendeten Spektralbereichs und die Detektionseinrichtung 26 einen im Strahlengang des ausgeblendeten ersten Spektralbereichs 29 angeordneten ersten Detektor 31 und einen im Strahlengang des reflektierten Spektralbereichs angeordneten zweiten Detektor 32 auf.

Fig. 3 zeigt des weiteren deutlich, daß die Selektionseinrichtung 25 im Strahlengang des reflektierten Spektralbereichs 30 angeordnete Mittel 33 zum Ausblenden eines zweiten Spektralbereichs 34 umfaßt und daß der zweite Detektor 32 im Strahlengang des ausgeblendeten zweiten Spektralbereichs 34 angeordnet ist.

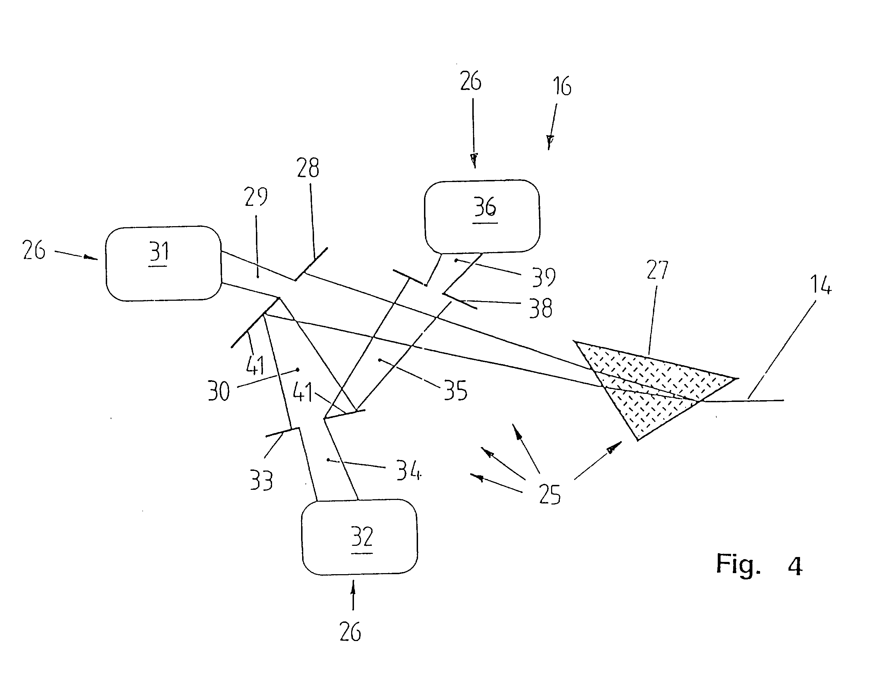

Bei dem in Fig. 4 dargestellten zweiten Ausführungsbeispiel einer erfindungsgemäß verwendeten Vorrichtung 16 weist die Selektionseinrichtung 25 im Strahlengang des reflektierten Spektralbereichs 30 angeordnete Mittel 33 einerseits zum Ausblenden eines zweiten Spektralbereichs 34 und andererseits zur weiteren Reflexion zumindest eines Teils 35 des hier nicht ausgeblendeten Spektralbereichs auf. Der zweite Detektor 32 ist im Strahlengang des ausgeblendeten zweiten Spektralbereichs 34 und ein dritter Detektor 36 ist im Strahlengang des weiter reflektierten Spektralbereichs 35 angeordnet.

Die Selektionseinrichtung 25 des in Fig. 4 dargestellten Ausführungsbeispiels der erfindungsgemäß verwendeten Vorrichtung 16 umfaßt des weiteren im Strahlengang des weiter reflektierten Spektralbereichs 35 angeordnete Mittel 38 zum Ausblenden eines dritten Spektralbereichs 39, wobei der dritte Detektor 36 im Strahlengang des ausgeblendeten dritten Spektralbereichs 39 angeordnet ist. Folglich werden mit dem hier dargestellten Ausführungsbeispiel insgesamt drei Spektralbereiche 29, 34 und 39 selektiert und detektiert. Entsprechend den Ausführungen in der allgemeinen Beschreibung ist eine Kaskadierung mehrerer Spektralbereiche ausblendenden und reflektierenden Mittel sowie Detektoren möglich, so daß ohne weiteres auch mehr als drei Spektralbereiche gleichzeitig selektierbar und detektierbar sind.

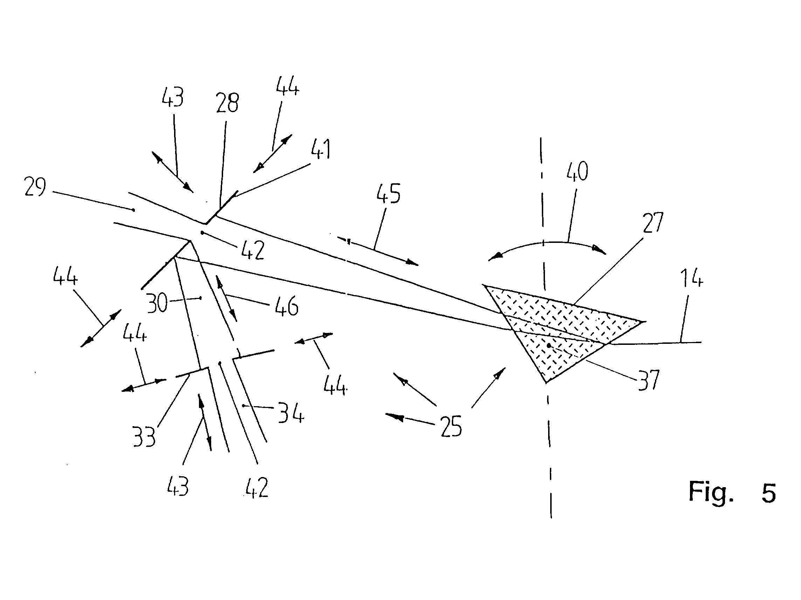

Bei den in den Fig. 3 bis 5 dargestellten Ausführungsbeispielen sind die Mittel 27 zur spektralen Zerlegung des Lichtstrahls 14 als Prisma ausgeführt, wobei das Prisma bei dem in Fig. 5 dargestellten dritten Ausführungsbeispiel um eine orthogonal zum einfallenden Lichtstrahl 14 und zur Zeichenebene verlaufende Achse 37 gemäß Pfeil 40 in Fig. 5 schwenkbar ist. Die Mittel 28, 33 und 38 sind jeweils als Spaltblende ausgeführt, wobei zur Reflexion zumindest eines Teils des nicht ausgeblendeten Spektralbereichs auf einer dem einfallenden Licht zugewandten Oberfläche jeweils eine total reflektierende Beschichtung 41 vorgesehen ist.

Gemäß dem in Fig. 5 dargestellten dritten Ausführungsbeispiel ist der Spalt 42 der Spaltblende sowohl in seiner Position als auch in seiner Dimension gemäß den Pfeilen 43, 44 veränderbar, wodurch sich vorgebbare bzw. einstellbare Spektralbereiche ausblenden lassen. Ebenso sind die die reflektierende Beschichtung 41 tragenden Flächen sowohl in ihrer Position als auch in ihrer Winkelstellung veränderbar, wodurch der reflektierte Spektralbereich ebenfalls beeinflußbar ist.

Hinsichtlich der Vorkehrung lichtabsorbierender Bereiche bzw. von Lichtfallen sowie hinsichtlich der Vermeidung bzw. Reduktion von Streulicht wird zur Vermeidung von Wiederholungen auf den allgemeinen Teil der Beschreibung verwiesen.

Bezüglich der in Fig. 5 dargestellten Ausführungsform wird noch ergänzend darauf hingewiesen, daß die Mittel 27 zur spektralen Zerlegung des Lichtstrahls 14 und die Mittel 28 zum Ausblenden eines ersten Spektralbereichs 29 bzw. zur Reflexion zumindest eines Teils 30 des nicht ausgeblendeten Spektralbereichs in ihrer Winkelstellung und Position relativ zueinander veränderbar sind. Dies ist durch Pfeil 45 lediglich angedeutet. Gleiches gilt für die Mittel 28 und 33 zum Ausblenden eines Spektralbereichs 29 bzw. 34, was durch Pfeil 46 angedeutet ist. Schließlich lassen sich auch die in Fig. 5 nicht gezeigten Detektoren in ihrer Relativlage zu den Mitteln 28, 33 in ihrer Winkelstellung und Position verändern.

Mit Nachdruck wird nochmals darauf hingewiesen, daß die in den Fig. 3 bis 5 jeweils dargestellte und zuvor erläuterte erfindungsgemäß verwendete Vorrichtung im Strahlengang eines in Fig. 1 schematisch dargestellten Fluoreszenzmikroskops 1 verwendet bzw. angeordnet sein kann.

## Patentansprüche

1. Verwendung einer Vorrichtung zur Selektion und Detektion mindestens zweier Spektralbereiche eines Lichtstrahls (14) im Strahlengang eines konfokalen Fluoreszenzmikroskops (1), wobei die Vorrichtung eine Selektionseinrichtung (25) mit Mitteln (27) zur spektralen Zerlegung des Lichtstrahls (14) und mit Mitteln (28) einerseits zum Ausblenden eines die letzteren Mittel passierenden ersten Spektralbereichs (29) und andererseits zur Reflexion zumindest eines Teils (30) des nicht ausgeblendeten Spektralbereichs und eine Detektionseinrichtung (26) mit einem im Strahlengang des ausgeblendeten ersten Spektralbereichs (29) angeordneten ersten Detektor (31) und mit einem im Strahlengang des reflektierten Spektralbereichs (30) angeordneten zweiten Detektor (32) umfaßt.

2. Verwendung nach Anspruch 1, wobei die Selektionseinrichtung (25) im Strahlengang des reflektierten Spektralbereichs (30) angeordnete Mittel (33) zum Ausblenden eines zweiten Spektralbereichs (34) umfaßt und daß der zweite Detektor (32) im Strahlengang des ausgeblendeten zweiten Spektralbereichs (34) angeordnet ist.

3. Verwendung nach Anspruch 1, wobei die Selektionseinrichtung (25) im Strahlengang des reflektierten Spektralbereichs (30) angeordnete Mittel (33) einerseits zum Ausblenden eines zweiten Spektralbereichs (34) und andererseits zur weiteren Reflexion zumindest eines Teils (35) des hier nicht ausgeblendeten Spektralbereichs umfaßt, der zweite Detektor (32) im Strahlengang des ausgeblendeten zweiten Spektralbereichs (34) angeordnet ist und ein dritter Detektor (36) im Strahlengang des weiter reflektierten Spektralbereichs (35) angeordnet ist.

4. Verwendung nach Anspruch 3, wobei die Selektionseinrichtung (25) im Strahlengang des weiter reflektierten Spektralbereichs (35) angeordnete Mittel (38) zum Ausblenden eines dritten Spektralbereichs (39) umfaßt und der dritte Detektor (36) im Strahlengang des ausgeblendeten dritten Spektralbereichs (39) angeordnet ist.

5. Verwendung nach einem der Ansprüche 1 bis 4, wobei mehrere Spektralbereiche (29, 34, 39) ausblendende und reflektierende Mittel (28, 33, 38) sowie Detektoren (31, 32, 36) kaskadiert zueinander angeordnet sind, so daß der jeweils ausgeblendete Spektralbereich (29, 34, 39) detektiert und der jeweils reflektierte Spektralbereich (30, 35) gegebenenfalls abermals ausgeblendet und ebenfalls detektiert wird.

6. Verwendung nach einem der Ansprüche 1 bis 5, wobei die zum Ausblenden und gegebenenfalls zur Reflexion dienenden Mittel (28, 33, 38) und der jeweils dazugehörende Detektor (31, 32, 36) als integrale Baugruppe ausgeführt sind.

7. Verwendung nach einem der Ansprüche 1 bis 6, wobei die Mittel (27) zur spektralen Zerlegung des Lichtstrahls (14) als Prisma, optisches Gitter oder Hologramm ausgeführt sind.

8. Verwendung nach Anspruch 7, wobei das Prisma, Gitter oder Hologramm um eine vorzugsweise orthogonal zum einfallenden Lichtstrahl (14) verlaufende Achse schwenkbar ist.

9. Verwendung nach einem der Ansprüche 1 bis 8, wobei die Mittel (28, 33, 38) zum Ausblenden eines Spektralbereichs (29, 34, 39) als Blende, vorzugsweise als Spaltblende, ausgeführt sind.

10. Verwendung nach einem der Ansprüche 1 bis 8, wobei die Mittel (28, 33, 38) einerseits zum Ausblenden eines Spektralbereichs (29, 34, 39) und andererseits zur Reflexion zumindest eines Teils (30, 35) des nicht ausgeblendeten Spektralbereichs als Spiegelblende ausgeführt sind, die auf mindestens einer ihrer dem einfallenden Licht zugewandten Oberflächen eine vorzugsweise total reflektierende Beschichtung (41) aufweist.

11. Verwendung nach Anspruch 9 oder 10, wobei der Spalt (42) der Spaltblende in seiner Position und/oder Dimension veränderbar ist.

12. Verwendung nach Anspruch 10, wobei die reflektierende Fläche bzw. die reflektierenden Flächen in ihrer Position und/oder Winkelstellung veränderbar ist bzw. sind.

13. Verwendung nach Anspruch 11 oder 12, wobei die Veränderung kontinuierlich, vorzugsweise über einen Motorantrieb, erfolgt.

14. Verwendung nach einem der Ansprüche 1 bis 13, wobei die Mittel (28, 33, 38) zum Ausblenden eines Spektralbereichs (29, 34, 39) und gegebenenfalls zur Reflexion zumindest eines Teils (30, 35) des nicht ausgeblendeten Spektralbereichs (30, 35) weitere Mittel zum Ausblenden von Spektrallinien, insbesondere Lichtfallen, aufweisen.

15. Verwendung nach Anspruch 14, wobei die Mittel zum Ausblenden von Spektrallinien als nicht reflektierende Bereiche bzw. lichtabsorbierende Bereiche und als integrale Bestandteile der Mittel zum Ausblenden und gegebenenfalls zur Reflexion ausgeführt sind.

16. Verwendung nach Anspruch 15, wobei die nicht reflektierenden Bereiche in ihrer Position und/oder Winkelstellung veränderbar sind.

17. Verwendung nach Anspruch 16, wobei die Veränderung kontinuierlich, vorzugsweise über einen Motorantrieb, erfolgt.

18. Verwendung nach einem der Ansprüche 1 bis 17, wobei in den unterschiedlichen Strahlengängen der ausgeblendeten und/oder reflektierten Spektralbereiche (29, 34, 39 bzw. 30, 35) Mittel gegebenenfalls zur Reduktion von Streulicht angeordnet sind.

19. Verwendung nach einem der Ansprüche 1 bis 18, wobei die Mittel (27) zur spektralen Zerlegung des Lichtstrahls (14) und die Mittel (28, 33, 38) zum Ausblenden eines Spektralbereichs (29, 34, 39) und gegebenenfalls zur Reflexion zumindest eines Teils (30, 35) des nicht ausgeblendeten Spektralbereichs in ihrer Winkelstellung und/oder Position relativ zueinander veränderbar sind.

20. Verwendung nach einem der Ansprüche 1 bis 19, wobei die verschiedenen Mittel (28, 33, 38) zum Ausblenden eines Spektralbereichs (29, 34, 39) und gegebenenfalls zur Reflexion zumindest eines Teils (30, 35) des nicht ausgeblendeten Spektralbereichs in ihrer Winkelstellung und/oder Position relativ zueinander veränderbar sind.

21. Verwendung nach einem der Ansprüche 1 bis 20, wobei die Detektoren (31, 32, 36) in ihrer Relativlage zu den Mitteln (28, 33, 38) zum Ausblenden eines Spektralbereichs (29, 34, 39) und gegebenenfalls zur Reflexion zumindest eines Teils (30, 35) des nicht ausgeblendeten Spektralbereichs in ihrer Winkelstellung und/oder Position zueinander veränderbar sind.

22. Verwendung nach einem der Ansprüche 19 bis 21, wobei die Veränderung kontinuierlich, vorzugsweise über einen Motorantrieb, erfolgt.

## Claims

1. Use of an apparatus for the selection and detection of at least two spectral regions in a beam of light (14) in the beam path of a confocal fluorescence microscope (1), wherein the apparatus comprises a selection device (25) having means (27) for the spectral splitting of the light beam (14) and having means (28), on the one hand, for masking a first spectral region (29) which passes through the last-mentioned means and, on the other hand, for reflecting at least a portion (30) of the non-masked spectral region, and a detection device (26) having a first detector (31) arranged in the beam path of the masked first spectral region (29) and having a second detector (32) arranged in the beam path of the reflected spectral region (30).

2. Use according to claim 1, wherein the selection device (25) comprises means (33), arranged in the beam path of the reflected spectral region (30), for masking a second spectral region (34), and the second detector (32) is arranged in the beam path of the masked second spectral region (34).

3. Use according to claim 1, wherein the selection device (25) comprises means (33) arranged in the beam path of the reflected spectral region (30), on the one hand, for masking a second spectral region (34) and, on the other hand, for the further reflection of at least a portion (35) of the spectral region that is not masked here, the second detector (32) is arranged in the beam path of the masked second spectral region (34) and a third detector (36) is arranged in the beam path of the spectral region (35) reflected further.

4. Use according to claim 3, wherein the selection device (25) comprises means (38), arranged in the beam path of the further-reflected spectral region (35), for masking a third spectral region (39), and the third detector (36) is arranged in the beam path of the masked third spectral region (39).

5. Use according to any one of claims 1 to 4, wherein several means (28, 33, 38) masking and reflecting spectral regions (29, 34, 39), and detectors (31, 32, 36) are disposed in a cascade arrangement relative to one another so that the particular spectral region (29, 34, 39) that is masked is detected and the particular spectral region (30, 35) that is reflected is optionally masked again and likewise detected.

6. Use according to any one of claims 1 to 5, wherein the means (28, 33, 38) used for masking and optionally for reflecting and the respective associated detector (31, 32, 36) are in the form of an integral unit.

7. Use according to any one of claims 1 to 6, wherein the means (27) for the spectral splitting of the light beam (14) are in the form of a prism, an optical grating or a hologram.

8. Use according to claim 7, wherein the prism, the grating or the hologram is pivotable about an axis extending preferably at right-angles to the incident light beam (14).

9. Use according to any one of claims 1 to 8, wherein the means (28, 33, 38) for masking a spectral region (29, 34, 39) are in the form of a diaphragm, preferably a slit diaphragm.

10. Use according to any one of claims 1 to 8, wherein the means (28, 33, 38), on the one hand, for masking a spectral region (29, 34, 39) and, on the other hand, for reflecting at least a portion (30, 35) of the non-masked spectral region, are in the form of a mirror diaphragm which has a preferably totally reflecting coating (41) on at least one of its surfaces facing the incident light.

11. Use according to claim 9 or 10, wherein the slit (42) of the slit diaphragm is alterable in respect of its position and/or dimension.

12. Use according to claim 10, wherein the reflecting face(s) is(are) alterable in respect of its(their) position and/or angular attitude.

13. Use according to claim 11 or 12, wherein the alteration is effected continuously, preferably by means of a motor drive.

14. Use according to any one of claims 1 to 13, wherein the means (28, 33, 38) for masking a spectral region (29, 34, 39) and optionally for reflecting at least a portion (30, 35) of the non-masked spectral region have further means for masking spectral lines, especially light traps.

15. Use according to claim 14, wherein the means for masking spectral lines are in the form of non-reflecting regions, or light-absorbing regions, and in the form of integral components of the means for masking and optionally for reflecting.

16. Use according to claim 15, wherein the non-reflecting regions are alterable in respect of their position and/or angular attitude.

17. Use according to claim 16, wherein the alteration is effected continuously, preferably by means of a motor drive.

18. Use according to any one of claims 1 to 17, wherein means, optionally for reducing scattered light, are arranged in the various beam paths of the masked and/or reflected spectral regions (29, 34, 39 and 30, 35, respectively).

19. Use according to any one of claims 1 to 18, wherein the means (27) for the spectral splitting of the light beam (14) and the means (28, 33, 38) for masking a spectral region (29, 34, 39) and optionally for reflecting at least a portion (30, 35) of the non-masked spectral region can be altered in respect of their angular attitude and/or position relative to one another.

20. Use according to any one of claims 1 to 19, wherein the various means (28, 33, 38) for masking a spectral region (29, 34, 39) and optionally for reflecting at least a portion (30, 35) of the non-masked spectral region are alterable in respect of their angular attitude and/or position relative to one another.

21. Use according to any one of claims 1 to 20, wherein the detectors (31, 32, 36), in their position relative to the means (28, 33, 38) for masking a spectral region (29, 34, 39) and optionally for reflecting at least a portion (30, 35) of the non-masked spectral region, are alterable in respect of their angular attitude and/or position relative to one another.

22. Use according to any one of claims 19 to 21, wherein the alteration is effected continuously, preferably by means of a motor drive.

## Revendications

1. Utilisation d'un dispositif pour la sélection et la détection d'au moins deux zones spectrales d'un faisceau lumineux (14) dans la marche des rayons d'un microscope à fluorescence (1) à foyer commun,
dans laquelle le dispositif comprend un arrangement de sélection (25) avec des moyens (27) pour la dispersion spectrale du faisceau lumineux (14) et avec des moyens (28) d'une part pour diaphragmer une première zone spectrale (29) passant lesdits moyens et d'autre part pour réfléchir au moins une partie (30) de la zone spectrale non diaphragmée et un arrangement de détection (26) avec un premier détecteur (31) disposé dans la marche des rayons de la première zone spectrale (29) diaphragmée et avec un deuxième détecteur (32) disposé dans la marche des rayons de la zone spectrale (30) réfléchie.

2. Utilisation selon la revendication 1,
dans laquelle l'arrangement de sélection (25) comprend des moyens (33), disposés dans la marche des rayons de la zone spectrale (30) réfléchie, pour diaphragmer une deuxième zone spectrale (34) et le deuxième détecteur (32) est disposé dans la marche des rayons de la deuxième zone spectrale (34) diaphragmée.

3. Utilisation selon la revendication 1,
dans laquelle l'arrangement de sélection (25) comprend des moyens (33), disposés dans la marche des rayons de la zone spectrale (30) réfléchie, d'une part pour diaphragmer une deuxième zone spectrale (34) et d'autre part pour réfléchir plus loin au moins une partie (35) de la zone spectrale non diaphragmée ici, le deuxième détecteur (32) est disposé dans la marche des rayons de la deuxième zone spectrale (34) diaphragmée et un troisième détecteur (36) est disposé dans la marche des rayons de la zone spectrale (35) réfléchie plus loin.

4. Utilisation selon la revendication 3,
dans laquelle l'arrangement de sélection (25) comprend des moyens (38), disposés dans la marche des rayons de la zone spectrale (35) réfléchie plus loin, pour diaphragmer une troisième zone spectrale (39) et le troisième détecteur (36) est disposé dans la marche des rayons de la troisième zone spectrale (39) diaphragmée.

5. Utilisation selon l'une des revendications 1 à 4,
dans laquelle des moyens (28, 33, 38) diaphragmant et réfléchissant plusieurs zones spectrales (29, 34, 39) ainsi que des détecteurs (31, 32, 36) sont disposés en cascade les uns par rapport aux autres de telle manière que la zone spectrale (29, 34, 39) respectivement diaphragmée est détectée et que la zone spectrale (30, 35) respectivement réfléchie est le cas échéant à nouveau diaphragmée et le cas échéant détectée.

6. Utilisation selon l'une des revendications 1 à 5,
dans laquelle les moyens (28, 33, 38) servant à diaphragmer et le cas échéant à réfléchir et le détecteur (31, 32, 36) respectivement adjoint sont réalisés sous forme de groupe de construction intégral.

7. Utilisation selon l'une des revendications 1 à 6,
dans laquelle les moyens (27) pour la dispersion spectrale du faisceau lumineux (14) sont réalisés sous forme d'un prisme, d'une grille optique ou d'un hologramme.

8. Utilisation selon la revendication 7,
dans laquelle le prisme, la grille ou l'hologramme est pivotant autour d'un axe avantageusement orthogonal au faisceau lumineux (14) incident.

9. Utilisation selon l'une des revendications 1 à 8,
dans laquelle les moyens (28, 33, 38) pour diaphragmer une zone spectrale (29, 34, 39) sont réalisés sous forme d'un diaphragme, de préférence sous forme d'un diaphragme à fente.

10. Utilisation selon l'une des revendications 1 à 8,
dans laquelle les moyens (28, 33, 38) d'une part pour diaphragmer une zone spectrale (29, 34, 39) et d'autre part pour réfléchir au moins une partie (30, 35) de la zone spectrale non diaphragmée sont réalisés sous la forme d'un diaphragme à réflecteur qui présente, sur au moins une de ses surfaces tournées vers la lumière incidente, un revêtement (41) de préférence totalement réfléchissant.

11. Utilisation selon la revendication 9 ou 10,
dans laquelle la fente (42) du diaphragme à fente est modifiable en position et/ou en dimension.

12. Utilisation selon la revendication 10,
dans laquelle la surface réfléchissante ou respectivement les surfaces réfléchissantes est modifiable ou respectivement sont modifiables en position et/ou en inclinaison.

13. Utilisation selon la revendication 11 ou 12,
dans laquelle la modification est réalisée en continu, de préférence au moyen d'une commande par moteur.

14. Utilisation selon l'une des revendications 1 à 13,
dans laquelle les moyens (28, 33, 38) pour diaphragmer une zone spectrale (29, 34, 39) et le cas échéant pour réfléchir au moins une partie (30, 35) de la zone spectrale (30, 35) non diaphragmée présentent des moyens supplémentaires pour diaphragmer des lignes spectrales, en particulier des pièges à lumière.

15. Utilisation selon la revendication 14,
dans laquelle les moyens pour diaphragmer des lignes spectrales sont réalisés sous forme de zones non réfléchissantes ou respectivement de zones absorbantes de la lumière et sous forme de constituants intégraux des moyens pour diaphragmer et le cas échéant pour réfléchir.

16. Utilisation selon la revendication 15,
dans laquelle les zones non réfléchissantes sont modifiables en position et/ou en inclinaison.

17. Utilisation selon la revendication 16,
dans laquelle la modification est effectuée en continu, de préférence au moyen d'une commande par moteur.

18. Utilisation selon l'une des revendications 1 à 17,
dans laquelle des moyens le cas échéant pour la réduction de la lumière parasite sont disposés dans les différentes marches des rayons des zones spectrales (29, 34, 39 ou respectivement 30, 35) diaphragmées et/ou réfléchies.

19. Utilisation selon l'une des revendications 1 à 18,
dans laquelle les moyens (27) pour la dispersion spectrale du faisceau lumineux (14) et les moyens (28, 33, 38) pour diaphragmer une zone spectrale (29, 34, 39) et le cas échéant pour réfléchir au moins une partie (30, 35) de la zone spectrale non diaphragmée sont modifiables en inclinaison et/ou en position les uns relativement aux autres.

20. Utilisation selon l'une des revendications 1 à 19,
dans laquelle les divers moyens (28, 33, 38) pour diaphragmer une zone spectrale (29, 34, 39) et le cas échéant pour réfléchir au moins une partie (30, 35) de la zone spectrale non diaphragmée sont modifiables en inclinaison et/ou en position les uns relativement aux autres.

21. Utilisation selon l'une des revendications 1 à 20,
dans laquelle les détecteurs (31, 32, 36) sont modifiables, en position relative par rapport aux moyens (28, 33, 38) pour diaphragmer une zone spectrale (29, 34, 39) et le cas échéant pour réfléchir au moins une partie (30, 35) de la zone spectrale non diaphragmée, en inclinaison et/ou en position les uns par rapport aux autres.

22. Utilisation selon l'une des revendications 19 à 21,
dans laquelle la modification est effectuée en continu, de préférence au moyen d'une commande par moteur.
